# EUROPEAN PATENT SPECIFICATION

(11) **EP 1 918 765 B1**
(45) Date of publication and mention of the grant of the patent: **14.01.2015**
(21) Application number: 07021170.1
(22) Date of filing: 30.10.2007
(51) Int. Cl.: G02F 1/133, G02F 1/1333, G02F 1/1339, G06F 3/041

(54) **Display apparatus and method of fabricating the same**
Anzeigevorrichtung und Herstellungsverfahren dafür
Appareil d'affichage et son procédé de fabrication

(30) Priority: 31.10.2006 KR 20060106668
(43) Date of publication of application: 07.05.2008
(60) Divisional application: 10008907.7
(73) Proprietor: Samsung Display Co., Ltd., Yongin-City, Gyeonggi-Do (KR)
(72) Inventor: Kim, Yu-Jin, Asan-si Chungcheongnam-do (KR); Kim, Su-Jeong, Yongsan-gu Seoul (KR); Baek, Ju-Hyeon, Cheonan-si Chungcheongnam-do (KR); Kim, Beom-Jun, Seochu-gu Seoul (KR); Lee, Myung-Sub, Seoul (KR); Jeong, Ji-Young, Cheonan-si Chungcheongnam-do (KR); Lee, Yun-Seok, Cheonan-si Chungcheongnam-do (KR)
(74) Representative: Weitzel, Wolfgang

(56) References cited:
- WO-A-2005/020058
- US-A1- 2002 075 443
- US-A1- 2006 102 462
- US-A1- 2006 109 222
- US-B1- 6 501 529

## Description

### BACKGROUND OF THE INVENTION

### Field of the Invention

The present invention relates to a display apparatus and a method of fabricating the same.

### Discussion of the Background

A display apparatus that displays an image may also include a touch panel. In general, a touch panel allows a user to input a command using the user's hand or an object without using an input device such as a keyboard or mouse. When the user touches the touch panel, the display apparatus detects the contact point on the touch panel and outputs an image on the screen corresponding to the command.

Accordingly, the touch panel type display apparatus includes the touch panel and a display panel. The touch panel receives the command from the user and detects the contact point. Then, the display panel outputs an image on the screen corresponding to the command.

As described above, since the touch panel type display apparatus includes the touch panel and the display panel, the display apparatus is thicker. Further, since the touch panel and the display panel are fabricated separately from each other, manufacturing cost and time may be increased.

US 6,501,529 B1 describes a liquid crystal display element incorporating a touch sensor unit. In a liquid crystal display element where a liquid crystal layer is inserted between a first substrate and a second substrate, a display electrode for displaying an image and a touch electrode for detecting a touch position are provided on the surfaces of the first substrate and the second substrate opposing with each other.

WO 2005/020058 A1 describes an active matrix display device having touch input functionality. The device comprises a plurality of pixels arranged in a row and column array, each pixel comprising a pixel electrode to which data voltages can be supplied by an associated data conductor via a respective thin film transistor having a drain terminal connected to the pixel electrode. The pixels each further comprise a body which electrically connects the associated pixel electrode to another electrode in response to touch-input to the pixel, the connection being detectable via the associated data conductor.

US 2006/109222 A1 describes a display device comprising a display panel, a plurality of pixels disposed on the display panel, a plurality of sensor data lines disposed on the display panel and disposed between two adjacent pixels, and a plurality of sensing units disposed on the display panel and disposed between two adjacent pixels.

### SUMMARY OF THE INVENTION

The present invention provides a display apparatus as defined in claim 1. Accordingly the display apparatus comprises a first substrate and a second substrate facing each other, a pixel electrode (160) disposed on the first substrate, a sensing electrode disposed on the first substrate and spaced apart from the pixel electrode, a first spacer disposed on the second substrate and facing the sensing electrode, wherein the first spacer is connected to the sensing electrode in response to an external force, and a common electrode covering the first spacer. The display apparatus is characterized by a concave-convex section on the surface of the first spacer facing the sensing electrode.

The present invention also provides a method of fabricating a display apparatus as defined in claim 8. Accordingly, the method comprises forming a pixel electrode and a sensing electrode spaced apart from each other on a first substrate, forming a first insulating layer on a second substrate, patterning the first insulating layer to form a first spacer, forming a common electrode on the second substrate, wherein the common electrode covers the upper surface of the first spacer, and coupling the first substrate and the second substrate together, the first spacer facing and being spaced apart from an upper surface of the sensing electrode. The method is characterized in that the first spacer comprises a concave-convex section on an upper surface thereof.

Additional features of the invention are defined in the dependent claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a plan view showing a display apparatus according to an exemplary embodiment of the present invention.
FIG. 2 is a sectional view taken along line I-I' of FIG. 1.
FIG. 3A, FIG. 3B, FIG. 3C, and FIG. 3D are sectional views showing a method of fabricating the display apparatus of FIG. 2.
FIG. 4 is a sectional view taken along line I-I' of FIG. 1 according to another exemplary embodiment of the present invention.
FIG. 5A, FIG. 5B, FIG. 5C, and FIG. 5D are sectional views showing a method of fabricating the display apparatus of FIG. 4.
FIG. 6 is a sectional view taken along line I-I' of FIG. 1 according to another display apparatus, which is not part of the invention.
FIG. 7A, FIG. 7B, and FIG. 7C are sectional views showing a method of fabricating the display apparatus of FIG. 6, wherein this method also does not form part of the invention.
FIG. 8 is a sectional view taken along line I-I' of FIG. 1 according to another exemplary embodiment of the present invention.
FIG. 9A, FIG. 9B, and FIG. 9C are sectional views showing a method of fabricating the display apparatus of FIG. 8.
FIG. 10 is a sectional view taken along line I-I' of FIG. 1 according to another display apparatus, which is not part of the invention.
FIG. 11A, FIG. 11B, and FIG. 11C, which also do also not form part of the invention, are plan views each showing the shape of a first groove formed in the spacer of FIG. 10.
FIG. 12A, FIG. 12B, FIG. 12C, and 12D are sectional views showing a method of fabricating the display apparatus of FIG. 10, wherein this method also does not form part of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

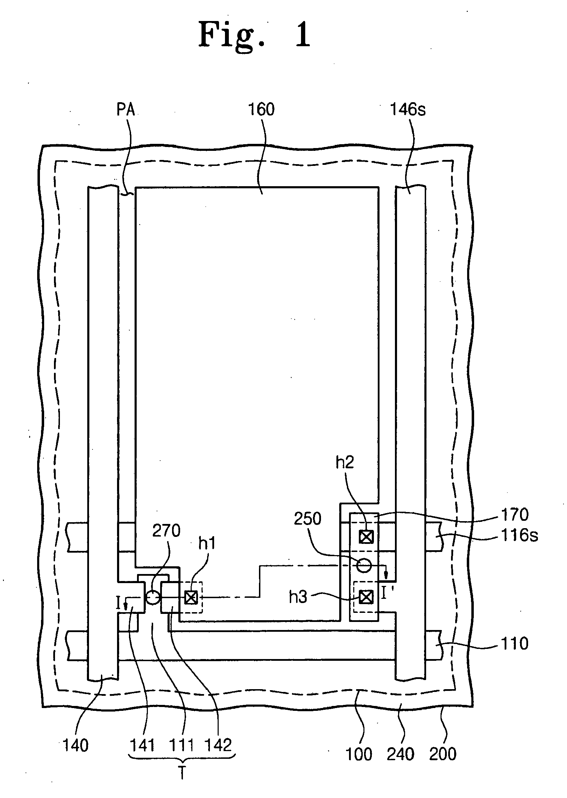

FIG. 1 is a plan view showing a display apparatus according to an exemplary embodiment of the present invention.

Referring to FIG. 1, the display apparatus includes first and second substrates 100 and 200 facing each other. The first substrate 100 includes a gate line 110 and a data line 140. The gate line 110 extends in a row direction, and the data line 140 extends in a column direction. The gate line 110 and the data line 140 cross each other, thereby defining pixel area PA. FIG. 1 shows one pixel area, but plural gate lines, data lines, and pixel areas are provided in the display apparatus. Since all pixel areas PA generally have the same structure and the same function, the following description focuses on the single pixel area PA shown in FIG. 1.

The pixel area PA includes a thin film transistor T, a pixel electrode 160, and a sensing electrode 170. The thin film transistor T includes a gate electrode 111, a source electrode 141, and a drain electrode 142. The gate electrode 111 branches from the gate line 110, the source electrode 141 branches from the data line 140, and the drain electrode 142 is spaced apart from the source electrode 141. The pixel electrode 160 is located in the pixel area PA, and it is connected to the drain electrode 142 through a first contact hole h1.

The pixel area PA includes first and second sensing lines 116s and 146s, which are separate from the gate line 110 and the data line 140. The first sensing line 116s and the gate line 110 may be formed on the same layer, and the second sensing line 146s and the data line 140 may be formed on the same layer. The first sensing line 116s is generally parallel to the gate line 110, and the second sensing line 146s is generally parallel to the data line 140 and insulated from the first sensing line 116s. The sensing electrode 170 is spaced apart from the pixel electrode 160 and is formed in the vicinity of the area in which the first and second sensing lines 116s and 146s cross each other. The sensing electrode 170 is connected to the first sensing line 116s and the second sensing line 146s through second contact hole h2 and third contact hole h3, respectively.

The second substrate 200 includes a common electrode 240, a first spacer 250, and a second spacer 270. The common electrode 240 corresponds to the pixel electrode 160, and it may cover substantially the entire surface of the second substrate 200. The first spacer 250 is arranged corresponding to the sensing electrode 170, and the second spacer 270 is arranged corresponding to a channel region of the thin film transistor T.

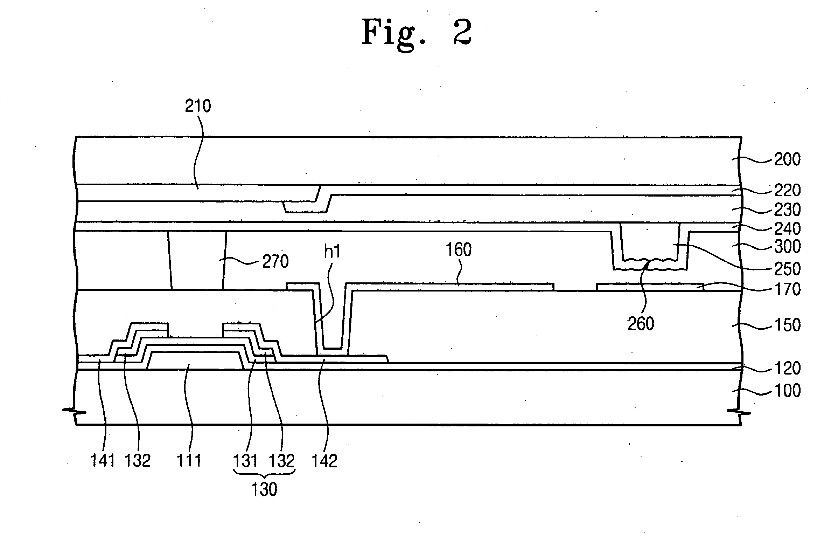

FIG. 2 is a sectional view taken along line I-I' of FIG. 1.

Referring to FIG. 2, the gate electrode 111 is formed on the first substrate 100 and is covered with a gate insulating layer 120, which may cover the first substrate 100. A semiconductor layer pattern 130 is formed on the gate insulating layer 120 and includes an active pattern 131 and an ohmic contact pattern 132. The active pattern 131 has a channel region in which a channel forms when the thin film transistor T operates. The ohmic contact pattern 132 is divided into two portions, and the source electrode 141 and the drain electrode 142 are respectively formed along the divided portions. The source electrode 141 and the drain electrode 142 are covered with a passivation layer 150, which may cover the first substrate 100. The passivation layer 150 includes the first contact hole h1 that exposes the drain electrode 142. The pixel electrode 160 and the sensing electrode 170, which are spaced apart from each other, are formed on the passivation layer 150.

A light blocking layer pattern 210 is formed on the second substrate 200. The light blocking layer pattern 210 covers an area corresponding to the thin film transistor T and a boundary of the pixel area PA, and it blocks transmission of light in a corresponding area. The light blocking layer pattern 210 is opened in the pixel area PA, and a color filter 220 is arranged in the opened portion. The color filter 220 includes red, green, and blue filters, which correspond to the three primary colors of light, and the filters are alternately aligned according to each pixel area PA. A color image is displayed based on the combination of the three primary colors. An overcoat layer 230 is formed on the light blocking layer pattern 210 and the color filter 220 and planarizes the surface of the second substrate 200.

The first spacer 250 is formed on the overcoat layer 230 and is spaced apart from the sensing electrode 170 while facing the sensing electrode 170. The first spacer 250 includes an insulator protruding toward the first substrate 100 and having a concave-convex section 260 on the upper surface thereof. The common electrode 240 covers the first spacer 250 and is formed on the second substrate 200. The first spacer 250 including the common electrode 240 has conductivity because it is covered with the common electrode 240. The second spacer 270 is formed on the common electrode 240 and contacts the surface of the first substrate 100 in an area corresponding to the channel region of the thin film transistor T. The second spacer 270 can also be located corresponding to the gate line 110 or the data line 140. The second spacer 270 maintains an interval between the first and second substrates 100 and 200.

When the display apparatus operates, a reference voltage is applied to the first and second sensing lines 116s and 146s. When a user touches a portion of a screen in order to execute a specific command, the first spacer 250 corresponding to the touched portion of the screen contacts the sensing electrode 170. Since the first spacer 250 is covered with the conductive common electrode 240, the resistance value at the contact portion changes. Further, since the sensing electrode 170 is connected to the first and second sensing lines 116s and 146s through the second and third contact holes h2 and h3, respectively, the reference voltage changes at the contact portion.

Accordingly, the portion of the screen touched by the user can be detected by detecting a variation of the reference voltage. When the touched portion is detected, the command selected by the user is determined and then image information corresponding to the command is displayed.

In order to display the image information, a gate signal and a data signal are applied to the gate line 110 and the data line 140, respectively. The gate signal turns thin film transistor T on, and a data voltage corresponding to the data signal is applied to the pixel electrode 160 in response to the gate signal. Simultaneously to this, the common voltage is applied to the common electrode 240. The data voltage may change in each frame according to image information to be displayed, and the common voltage remains constant. The difference between the data voltage and the common voltage establishes an electric field between the first and second substrates 100 and 200.

The electric field exerts influence on the display means provided between the first and second substrates 100 and 200. The display means differs according to the type of display apparatus. For example, in a liquid crystal display, the display means is a liquid crystal, and a liquid crystal layer 300 is interposed between the first and second substrates 100 and 200. The liquid crystal layer 300 includes the liquid crystal, and the liquid crystal's alignment changes according to the intensity and direction of the electric field. The amount of light irradiated to an exterior through the liquid crystal layer 300 changes according to the alignment of the liquid crystal, and an image is displayed corresponding to the amount of light.

According to the exemplary embodiment described above, since the elements that play a role of the touch panel and the display panel are provided on the first and second substrates 100 and 200, a separate touch panel is not necessary.

In the operation described above, the first spacer 250 may frequently contact the sensing electrode 170. As the contact is repeated, the common electrode 240 may separate from the surface of the first spacer 250 due to impact of the repeated contact. The concave-convex section 260 formed in the first spacer 250 may prevent the common electrode 240 from separating from the first spacer 250. That is, the concave-convex section 260 may increase the contact area between the common electrode 240 and the first spacer 250 to prevent the separation. Further, although the common electrode 240 may be locally separated from the first spacer 250, the increased contact area of the concave-convex section 260 may permit the common electrode 240 to still be used to detect the contact position.

In this regard, no limitation is given to the shape of the concave-convex section 260 provided the concave-convex section 260 increases the contact area between the common electrode 240 and the first spacer 250. That is, the concave-convex section 260 may have a corrugated shape in which curved concave and convex sections are alternately aligned. Also, the concave-convex section 260 may have a saw-tooth shape in which sharp linear concave and convex sections are alternately aligned.

The first spacer 250, the sensing electrode 170, and the first and second sensing lines 116s and 146s have no position-based limitation when performing the function of the touch panel. Accordingly, they may be located at different positions than those shown in FIG. 1 and FIG. 2. For example, the first and second sensing lines 116s and 146s can be located in an area hidden by the light blocking layer pattern 210. In this case, the area of a portion, in which light is blocked in the pixel area PA, is decreased, thereby increasing the aperture ratio.

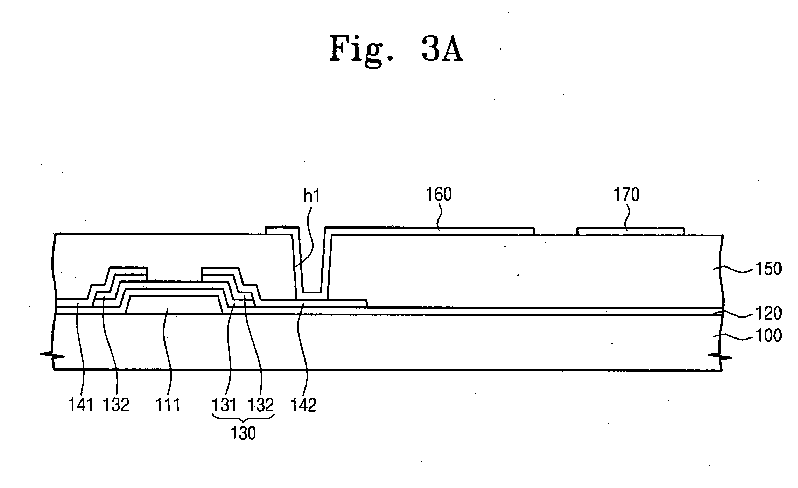

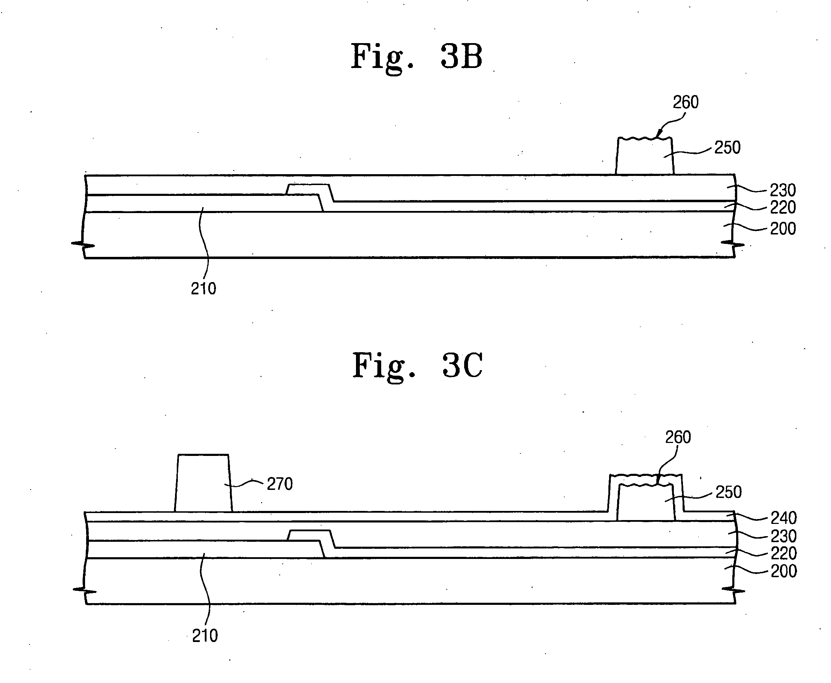

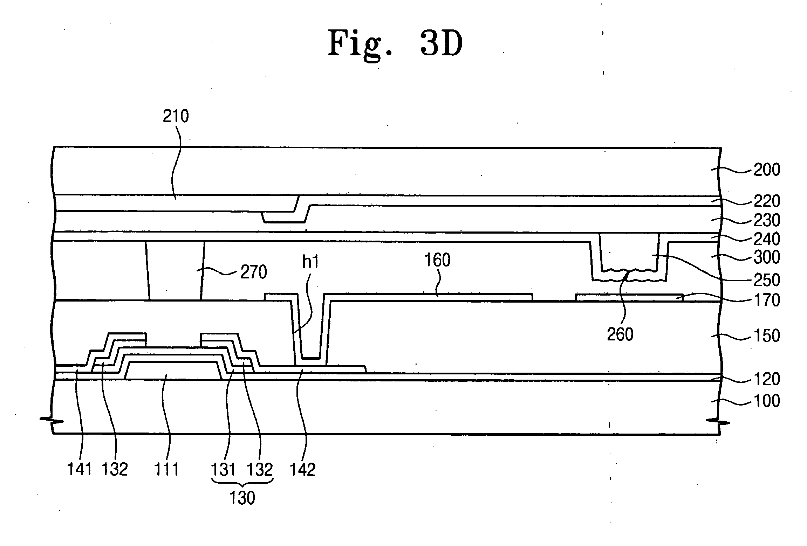

FIG. 3A, FIG. 3B, FIG. 3C, and FIG. 3D are sectional views showing a method of fabricating the display apparatus of FIG. 2.

Referring to FIG. 3A, a gate conductive layer is formed on the first substrate 100 and patterned to form the gate electrode 111. The gate line 110 and the first sensing line 116s are also formed during the patterning process of the gate conductive layer. Then, the gate insulating layer 120 and the semiconductor layer pattern 130 are formed. A data conductive layer is formed on the semiconductor layer pattern 130 and patterned to form the source electrode 141 and the drain electrode 142. The data line 140 and the second sensing line 146s are also formed during the patterning process of the data conductive layer.

The passivation layer 150 is formed on the source electrode 141 and the drain electrode 142. A transparent conductive layer is formed on the passivation layer 150 and patterned to form the pixel electrode 160 and the sensing electrode 170.

Referring to FIG. 3B, a light blocking layer is formed on the second substrate 200 and patterned to form the light blocking layer pattern 210. A color photoresist layer is formed on the light blocking layer pattern 210 and patterned to form the color filter 220. The overcoat layer 230 is formed on the light blocking layer pattern 210 and the color filter 220.

A photosensitive insulating layer is coated on the overcoat layer 230. An exposure and development process is then performed for the photosensitive insulating layer, thereby forming the first spacer 250 having the concave-convex section 260. In order to form the concave-convex section 260, a half-tone exposure process may be performed in an area in which the concave-convex section 260 is to be formed. The half-tone exposure process will be described in detail below.

Referring to FIG. 3C, a transparent conductive layer is deposited on the second substrate 200. The transparent conductive layer covers the first spacer 250 so the first spacer 250 has conductivity. The transparent conductive layer itself corresponds to the common electrode 240. Alternatively, a portion of the transparent conductive layer may be etched to form the common electrode 240. In this case, the common electrode 240 and a portion covering the first spacer 250 can be spaced apart from each other through the etching process. In the liquid crystal device, the common electrode 240 may have cutouts formed by removing predetermined areas of the transparent conductive layer. The cutouts divide the pixel area PA into a plurality of domains, thereby providing the liquid crystal device with a wide viewing angle.

An insulating layer is coated on the common electrode 240 and patterned, thereby forming the second spacer 270. The second spacer 270 is spaced apart from the first spacer 250.

Referring to FIG. 3D, the first substrate 100 is coupled with the second substrate 200 such that they face each other, and the liquid crystal layer 300 is formed therebetween. During the coupling process, the first and second substrates 100 and 200 are aligned so the first spacer 250 is spaced apart from the upper surface of the sensing electrode 170.

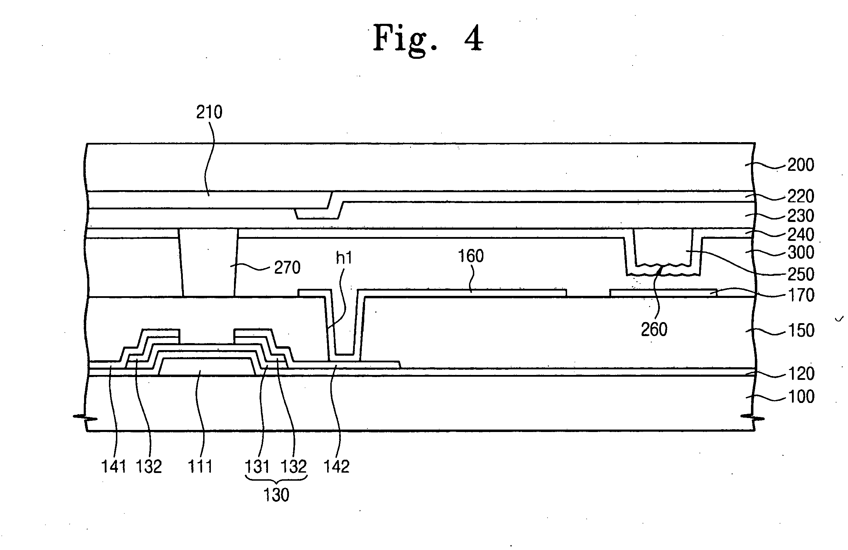

FIG. 4 is a sectional view taken along line I-I' of FIG. 1 according to another exemplary embodiment of the present invention.

Referring to FIG. 4, the display apparatus includes first and second substrates 100 and 200, and a liquid crystal layer 300 interposed therebetween. A gate electrode 111, a semiconductor layer pattern 130, a source electrode 141, a drain electrode 142, a pixel electrode 160, and a sensing electrode 170 are formed on the first substrate 100. A light blocking layer pattern 210, a color filter 220, an overcoat layer 230, a common electrode 240, and first and second spacers 250 and 270 are formed on the second substrate 200.

The first and second spacers 250 and 270 are formed on the overcoat layer 230. The first spacer 250 has a concave-convex section 260 on the surface thereof and is spaced apart from the sensing electrode 170. The second spacer 270 contacts the first substrate 100. The common electrode 240 covers the first spacer 250, and a portion of the common electrode 240, which covers the first spacer 250, contacts the sensing electrode 170 when external force is applied thereto. Further, the common electrode 240 exposes the second spacer 270 instead of covering the second spacer 270. Thus, the second spacer 270 has insulating properties. The second spacer 270 may swing from side to side due to external impact, so that the second spacer 270 can move from its position and contact a conductive portion on the first substrate 100. In this case, since the first substrate 100 may be electrically shorted from the second substrate 200, the second spacer 270 may have insulating properties in order to prevent this short-circuit.

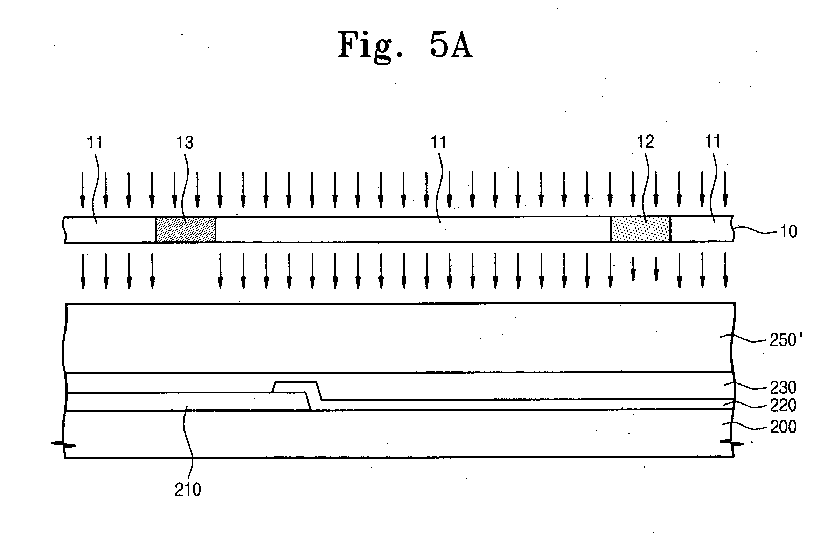

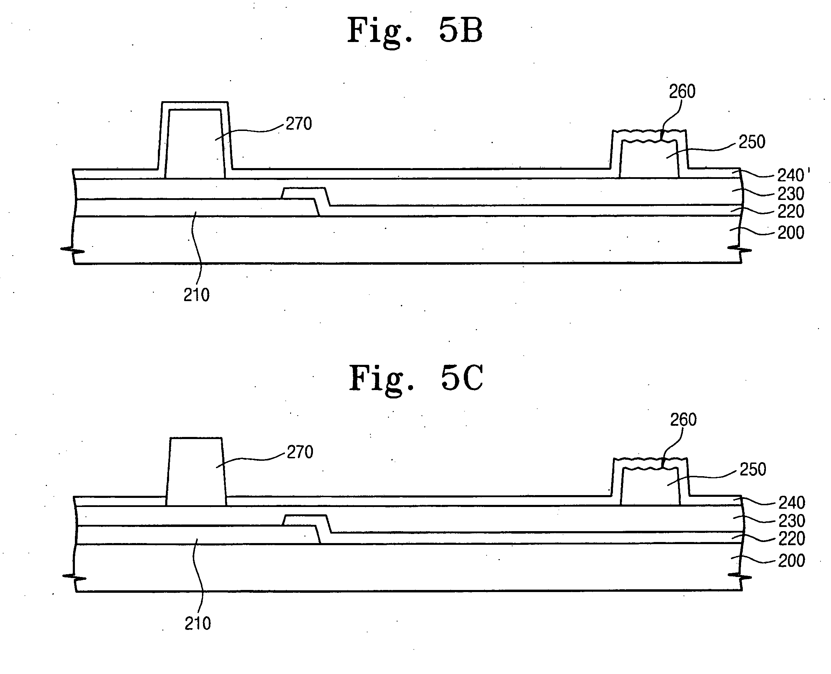

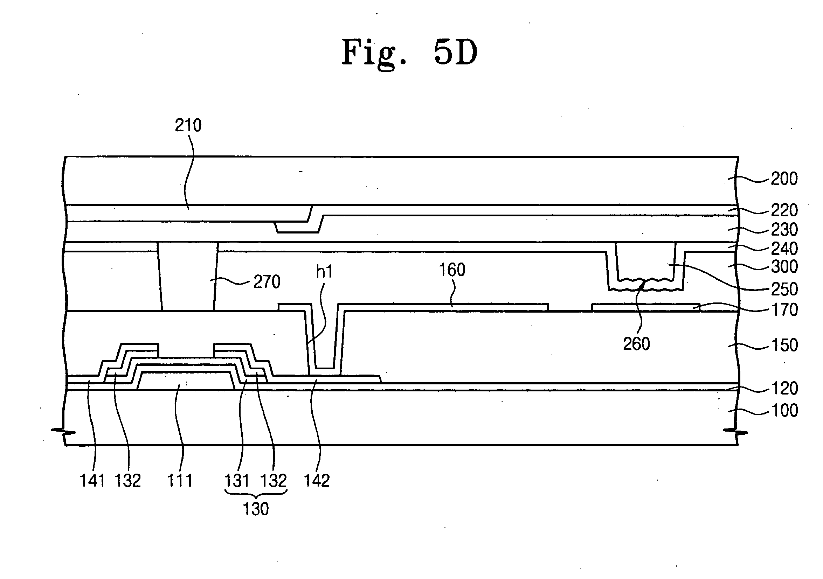

FIG. 5A, FIG. 5B, FIG. 5C, and FIG. 5D are sectional views showing a method of fabricating the display apparatus of FIG. 4.

Referring to FIG. 5A, the first substrate 100 may be fabricated through the method described in the previous embodiment, and the light blocking layer pattern 210, the color filter 220, and the overcoat layer 230 are formed on the second substrate 200. A photosensitive insulating layer 250' is coated on the overcoat layer 230, and an exposure process is performed for the photosensitive insulating layer 250'.

During the exposure process, the half-tone exposure process is performed. The half-tone exposure process may use a photo mask 10 having a transmitting part 11, an intermediate transmitting part 12, and a non-transmitting part 13. The transmitting part 11 and the non-transmitting part 13 transmit and block all light, respectively. The intermediate transmitting part 12 partially transmits light. The photo mask having the intermediate transmitting part 12 may include a slit mask or a halftone mask.

The slit mask includes a plurality of slits formed in the intermediate transmitting part 12, and the amount of transmitted light can be controlled by adjusting an interval between the slits. The intermediate transmitting part 12 of a halftone mask includes material that partially transmits light, and the amount of transmitted light can be controlled according to components of the material.

Referring to FIG. 5B, a development process is performed for the photosensitive insulating layer 250'. The development process is performed by providing developer onto the second substrate 200 through a dip or a spray scheme. The developer reacts with an exposed portion of the photosensitive insulating layer 250', thereby removing the portion.

During the development process, the photosensitive insulating layer 250' is completely removed from an area corresponding to the transmitting part 11. Further, the photosensitive insulating layer 250' is partially removed from an area corresponding to the intermediate transmitting part 12, thereby forming the first spacer 250 having the concave-convex section 260. However, the photosensitive insulating layer 250' remains in an area corresponding to the non-transmitting part 13, thereby forming the second spacer 270, which is taller than the first spacer 250.

As described above, the first and second spacers 250 and 270 may be simultaneously formed by performing a single exposure process using one photo mask, thereby reducing the number of processing steps and the manufacturing cost.

A transparent conductive layer 240' is deposited on the second substrate 200 to cover both the first and second spacers 250 and 270.

Referring to FIG. 5C, the transparent conductive layer 240' is patterned to form the common electrode 240. The common electrode 240 covers the first spacer 250, so the first spacer 250 has conductivity. Further, the common electrode 240 exposes the second spacer 270, so the second spacer 270 has insulating properties. Through the patterning process, the common electrode 240 may have cutouts formed by removing predetermined areas of the transparent conductive layer 240' so that the liquid crystal device may have a wide viewing angle.

Referring to FIG. 5D, the first substrate 100 is coupled with the second substrate 200 such that they face each other, and the liquid crystal layer 300 is formed therebetween. During the coupling process, the first and second substrates 100 and 200 are aligned so the first spacer 250 is spaced apart from the upper surface of the sensing electrode 170.

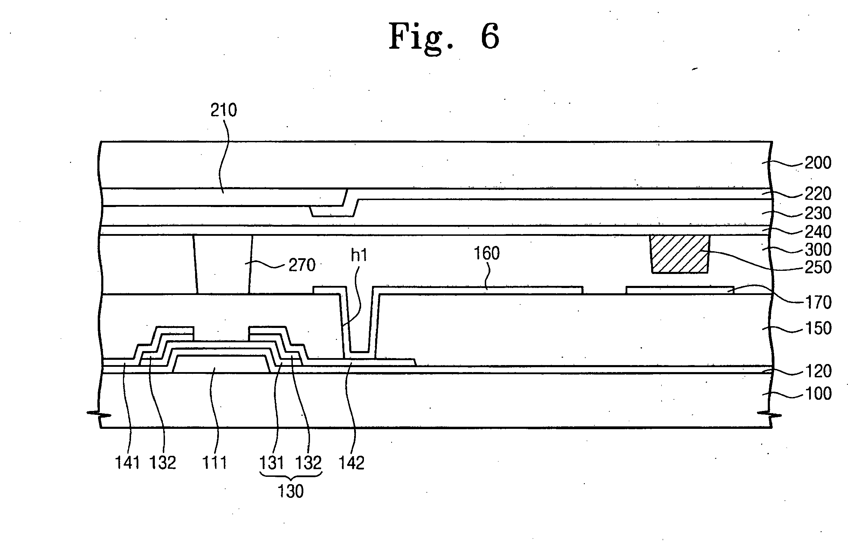

FIG. 6 is a sectional view taken along line I-I' of FIG. 1 according to another according to another display apparatus, which is not part of the invention.

Referring to FIG. 6, the display apparatus includes first and second substrates 100 and 200 and a liquid crystal layer 300 interposed therebetween. A gate electrode 111, a semiconductor layer pattern 130, a source electrode 141, a drain electrode 142, a pixel electrode 160, and a sensing electrode 170 are formed on the first substrate 100. A light blocking layer pattern 210, a color filter 220, an overcoat layer 230, a common electrode 240, and first and second spacers 250 and 270 are formed on the second substrate 200.

The first and second spacers 250 and 270 are formed on the common electrode 240. The first spacer 250 includes a conductive polymer, so the first spacer 250 itself has conductivity even without being covered with the common electrode 240. The second spacer 270 includes different material than the first spacer 250 and has insulating properties.

The first spacer 250 may include epoxy resin interconnected through heat curing and acryl resin interconnected through light curing. Further, the first spacer 250 may include polyethylene dioxythiophene-polystyrene sulfonate, which is a transparent, conductive polymer. The polyethylene dioxythiophene-polystyrene sulfonate is expressed by the following chemical formula.

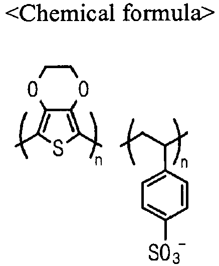

In the chemical formula, n and n' denote positive integers.

The first spacer 250 has a flat upper surface and an additional concave-convex section is not formed thereon. This is because the first spacer 250 is conductive and the potential problem of a conductive portion separating from the first spacer 250 does not exist.

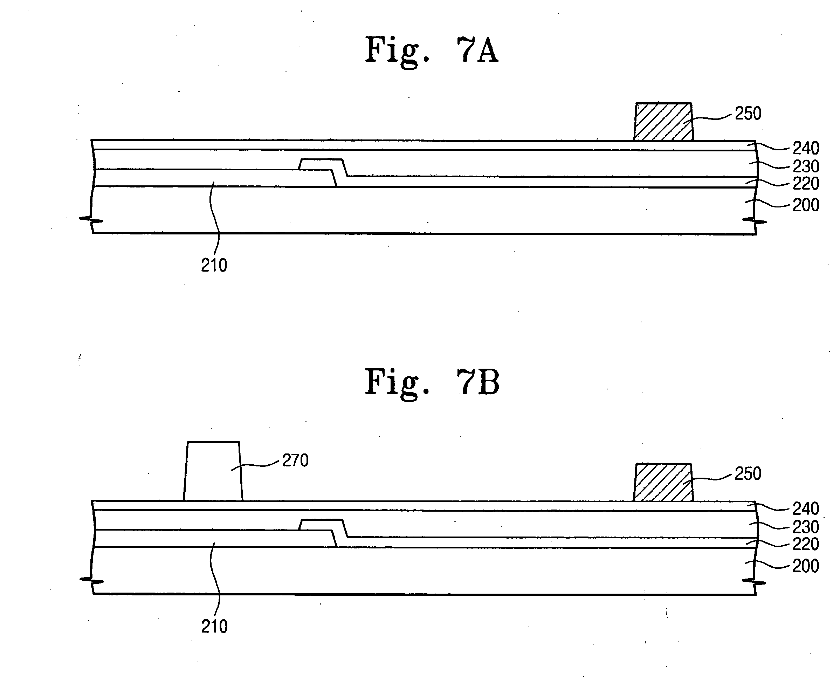

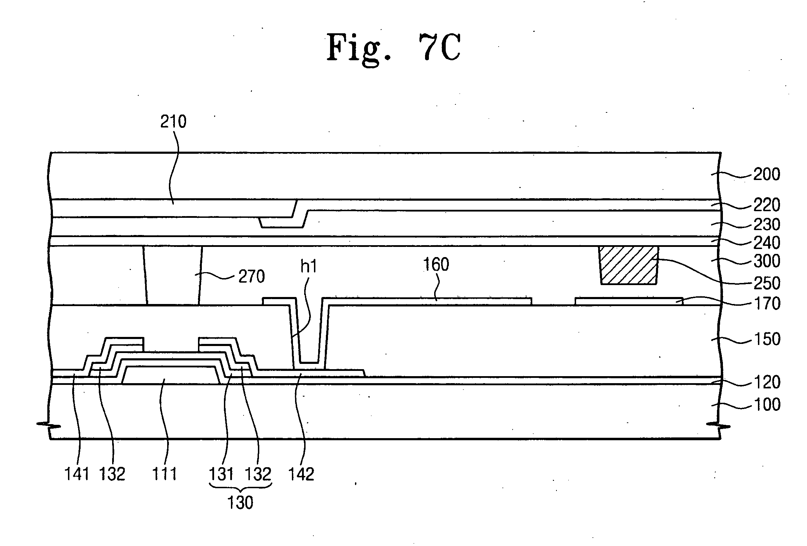

FIG. 7A, FIG. 7B, and FIG. 7C are sectional views showing a method of fabricating the display apparatus of FIG. 6, wherein this method also does not form part of the invention.

Referring to FIG. 7A, the first substrate 100 is fabricated, and the light blocking layer pattern 210, the color filter 220, the overcoat layer 230, and the common electrode 240 are formed on the second substrate 200. A conductive polymer layer is formed on the common electrode 240 and patterned to form the first spacer 250. When the conductive layer has photosensitivity, the patterning process includes exposure and development for the conductive layer. Otherwise, a photoresist layer pattern may be formed on the conductive layer, and the conductive layer can be etched using the photoresist layer pattern as an etching mask.

Referring to FIG. 7B, an insulating layer is formed on the common electrode 240 and an exposure and development process is performed for the insulating layer to form the second spacer 270. Since the first and second spacers 250 and 270 include different material from each other, they are formed through separate patterning processes.

Referring to FIG. 7C, the first substrate 100 is coupled with the second substrate 200 such that they face each other, and the liquid crystal layer 300 is formed therebetween.

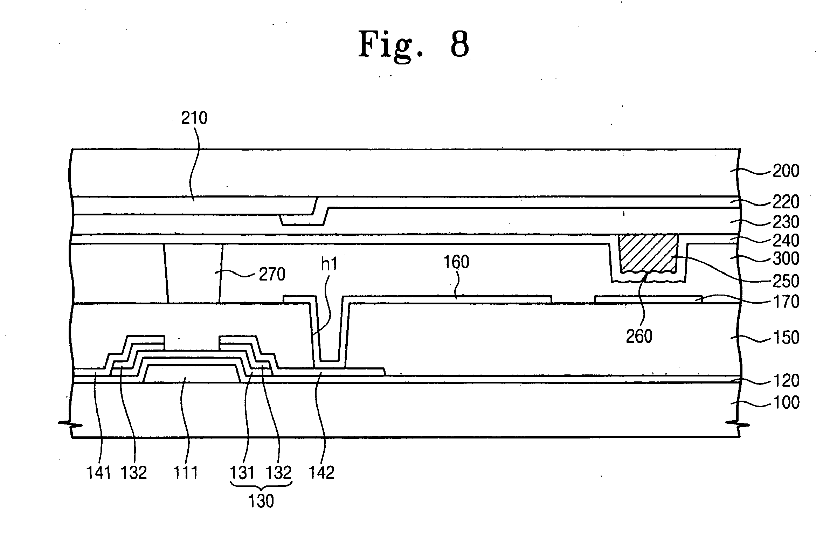

FIG. 8 is a sectional view taken along line I-I' of FIG. 1 according to another exemplary embodiment of the present invention.

Referring to FIG. 8, the display apparatus includes first and second substrates 100 and 200 and a liquid crystal layer 300 interposed therebetween. A gate electrode 111, a semiconductor layer pattern 130, a source electrode 141, a drain electrode 142, a pixel electrode 160, and a sensing electrode 170 are formed on the first substrate 100. A light blocking layer pattern 210, a color filter 220, an overcoat layer 230, a common electrode 240, and first and second spacers 250 and 270 are formed on the second substrate 200.

The common electrode 240 is formed between the first and second spacers 250 and 270, so that the common electrode 240 covers the first spacer 250. The first spacer 250 includes a conductive polymer and has a concave-convex section 260 on the surface thereof. Although the first spacer 250 is conductive, the first spacer 250 may be covered with the common electrode 240 to increase its conductivity. The concave-convex section 260 is included so that a portion of the common electrode 240 covering the first spacer 250 may not separate from the first spacer 250.

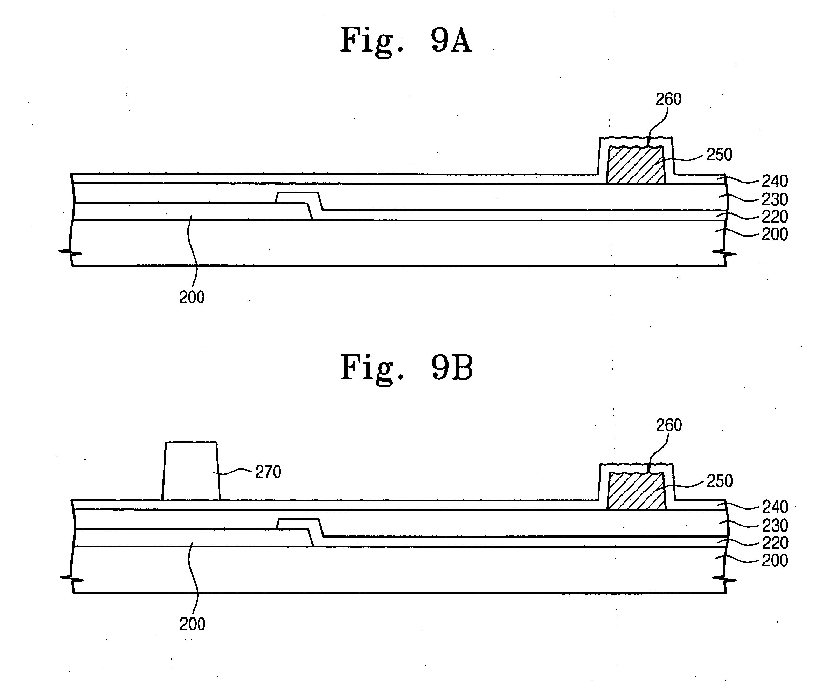

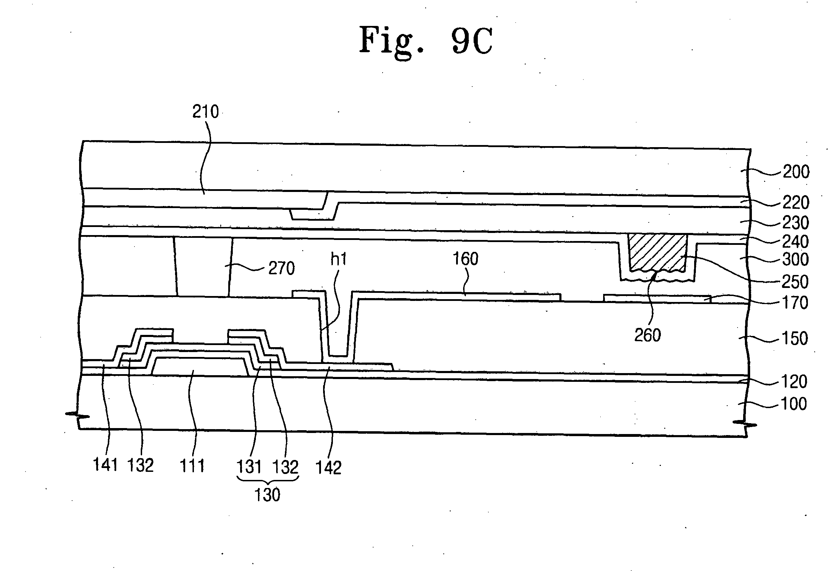

FIG. 9A, FIG. 9B, and FIG. 9C are sectional views showing a method of fabricating the display apparatus of FIG. 8.

Referring to FIG. 9A, the first substrate 100 is fabricated, and the light blocking layer pattern 210, the color filter 220, and the overcoat layer 230 are formed on the second substrate 200. A conductive polymer layer is formed on the overcoat layer 230 and patterned to form the first spacer 250. During the patterning process, exposure may be performed using a slit mask or a halftone mask such that the concave-convex section is formed on the surface of the first spacer 250. A transparent conductive layer is deposited on the second substrate 200, thereby forming the common electrode 240, which covers the first spacer 250.

Referring to FIG. 9B, an insulating layer is formed on the common electrode 240 and patterned to form the second spacer 270. Since the common electrode 240 is formed after forming the first spacer 250 and before forming the second spacer 270, the common electrode 240 is located between the first and second spacers 250 and 270 in a vertical structure.

Referring to FIG. 9C, the first substrate 100 is coupled with the second substrate 200 such that they face each other, and the liquid crystal layer 300 is formed therebetween.

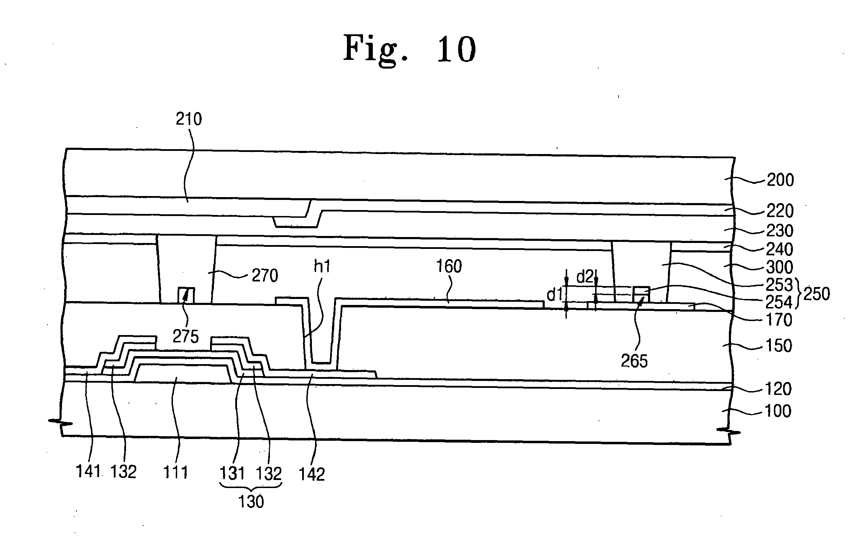

FIG. 10 is a sectional view taken along line I-I' of FIG. 1 according to another display apparatus, which is not part of the invention.

Referring to FIG. 10, the display apparatus includes first and second substrates 100 and 200 and a liquid crystal layer 300 interposed therebetween. A gate electrode 111, a semiconductor layer pattern 130, a source electrode 141, a drain electrode 142, a pixel electrode 160, and a sensing electrode 170 are formed on the first substrate 100. A light blocking layer pattern 210, a color filter 220, and an overcoat layer 230 are formed on the second substrate 200. A common electrode 240 and first and second spacers 250 and 270 are formed on the overcoat layer 230.

The first spacer 250 includes an insulator 253 having a first groove 265 and a conductor 254 inserted into an area in which the first groove 265 is formed. The upper surface of the insulator 253 contacts the sensing electrode 170. Since the first groove 265 has a depth d1, which is greater than the thickness d2 of the conductor 254, the conductor 254 is spaced apart from the sensing electrode 170 by the difference between the depth d1 and the thickness d2. However, when a user presses a screen, i.e. external force is applied thereto, the insulator 253 is compressed, so that the conductor 254 may contact the sensing electrode 170. As a result, the reference voltage applied to the sensing electrode 170 changes, so that a touched position on the screen can be detected.

The thickness d2 of the conductor 254 should be at least half the depth d1 of the first groove 265. If the conductor 254 is too thin, the conductor 254 may not contact the sensing electrode 170 when external force is applied thereto. In contrast, if the conductor 254 is too thick, the conductor 254 may contact the sensing electrode 170 even if external force is not applied thereto.

The second spacer 270 and the first spacer 250 can be simultaneously formed through the same process. As a result, the second spacer 270 has the same material as the first spacer 250, and they generally have the same height. The second spacer 270 may have an optional second groove 275. The second groove 275 reduces the contact area between the second spacer 270 and the surface of the first substrate 100. In such a case, the following advantages can be obtained.

The second spacer 270 may move from its position due to external force. However, since the second spacer 270 has constant elasticity, after the external force is removed, the second spacer 270 may return to its original position. The restoring force of the second spacer 270 changes according to the frictional force on a contact part between the second spacer 270 and the surface of the first substrate 100. If the frictional force is smaller, the second spacer 270 can more easily return to its original position. The frictional force is reduced as the contact area between the second spacer 270 and the surface of the first substrate 100 decreases. Thus, the optional second groove 275 reduces the frictional force, so that the second spacer 270 may more easily return to its original position.

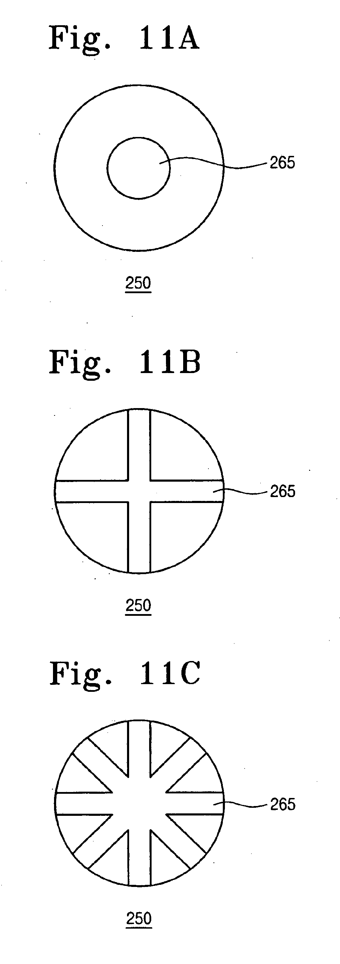

FIG. 11A, FIG. 11B, and FIG. 11C, which also do also not form part of the invention, are plan views each showing the shape of a first groove formed in the spacer of FIG. 10.

Referring to FIG. 11A, FIG. 11B, and FIG. 11C, the first groove 265 may have various shapes such as a cylindrical shape, a cross shape, an "X" shape, and a combination of the 'X' and cross. As long as the first groove 265 can receive the conductor 254, it may have any shape. If included, the optional second groove 275 may have the same shape as the first groove 265. That is, as long as the second groove 275 reduces the frictional force between the second spacer 270 and the surface of the first substrate 100, it also may have any shape.

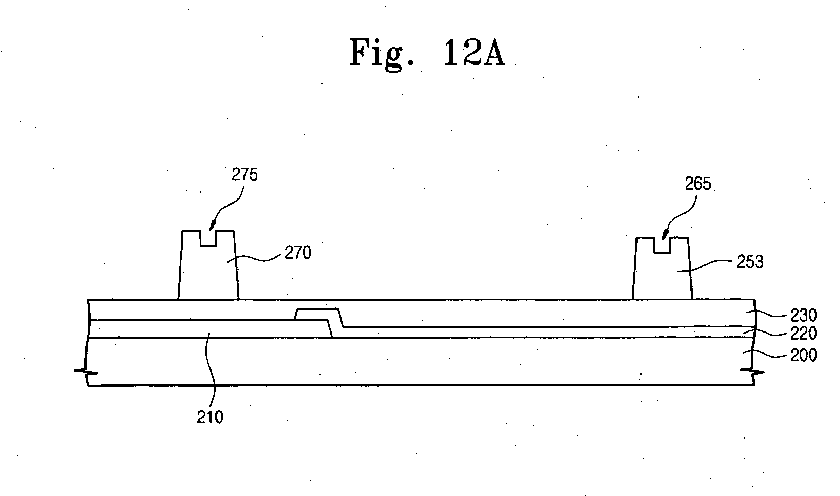

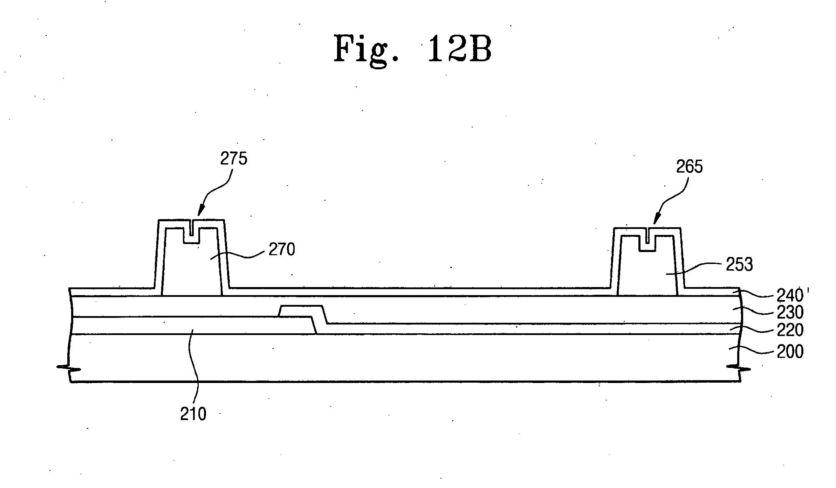

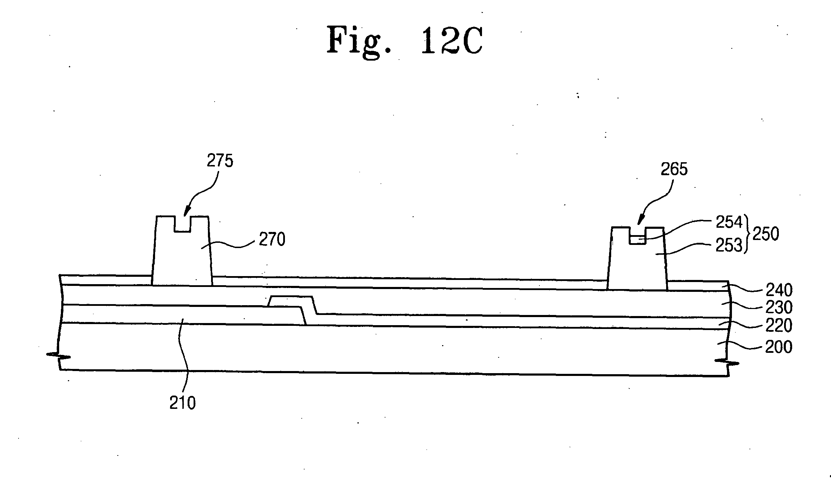

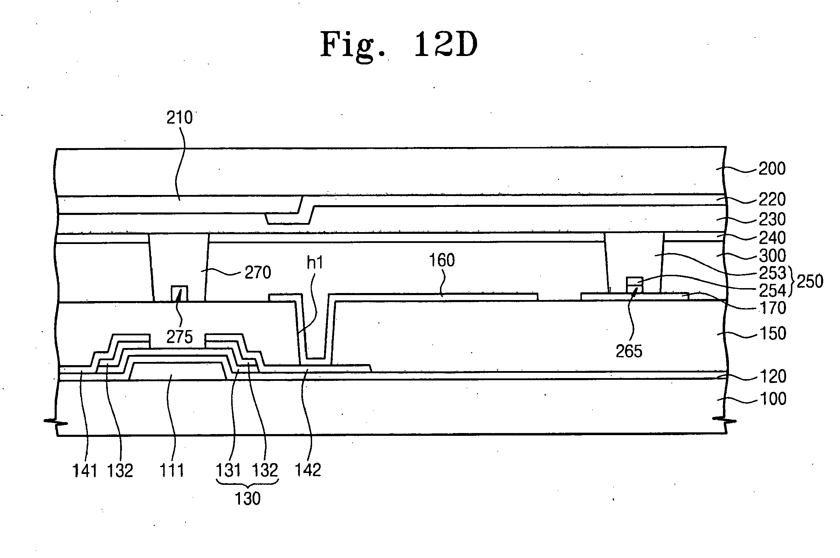

FIG. 12A, FIG. 12B, FIG. 12C, and 12D are sectional views showing a method of fabricating the display apparatus of FIG. 10, wherein this method also does not form part of the invention.

Referring to FIG. 12A, the first substrate 100 is fabricated, and the light blocking layer pattern 210, the color filter 220, and the overcoat layer 230 are formed on the second substrate 200. An insulating layer is formed on the overcoat layer 230 and patterned to form the first spacer 250 and the second spacer 270. The first spacer 250 includes the insulator 253 having the first groove 265 on the upper portion thereof. The optional second groove 275 is formed on the upper portion of the second spacer 270. Since the first spacer 250 and the second spacer 270 are formed from the insulating layer, they generally have the same height.

As described above, since the insulating layer is patterned such that the first spacer 250 and the second spacer 270 have the same height, the procedure can be easily performed as compared with the case in which the patterning process is performed such that the first spacer 250 and the second spacer 270 have different heights from each other.

Referring to FIG. 12B, a transparent conductive layer 240' is deposited on the second substrate 200, including the first and second grooves 265 and 275.

Referring to FIG. 12C, the transparent conductive layer 240' is patterned to form the common electrode 240. During the patterning process, the transparent conductive layer 240' remains in the first groove 265, thereby forming the conductor 254. Further, the transparent conductive layer 240' is removed from the surface of the second spacer 270 such that the common electrode 240 does not cover the second spacer 270.

Referring to FIG. 12D, the first substrate 100 is coupled with the second substrate 200 such that they face each other, and the liquid crystal layer 300 is formed therebetween.

According to the examples described above, the touch panel type display apparatus does not need an additional touch panel. Further, in the spacer that functions as the touch panel, the concave-convex section or the concave groove may be formed on the surface of the spacer, thereby improving the ability to detect the touched portion.

## Claims

1. A display apparatus, comprising:
a first substrate (100) and a second substrate (200) facing each other;
a pixel electrode (160) disposed on the first substrate (100);
a sensing electrode (170) disposed on the first substrate (100) and spaced apart from the pixel electrode (160);
a first spacer (250) disposed on the second substrate (200) and facing the sensing electrode (170), wherein the first spacer (250) is connected to the sensing electrode (170) in response to an external force; and
a common electrode (240) covering the first spacer (250);
**characterized by**
a concave-convex section (260) on the surface of the first spacer (250) facing the sensing electrode (170).

2. The display apparatus of claim 1, further comprising a second spacer (270) disposed on the second substrate (200) and spaced apart from the first spacer (250), wherein the second spacer (270) maintains an interval between the first substrate (100) and the second substrate (200).

3. The display apparatus of claim 2, wherein the common electrode (240) is disposed between the second substrate (200) and the second spacer (270).

4. The display apparatus of claim 2, further comprising a common electrode (240) disposed on the second substrate (200), covering the first spacer (250), and exposing the second spacer (270).

5. The display apparatus of claim 1, further comprising a liquid crystal layer (300) disposed between the first substrate (100) and the second substrate (200).

6. The display apparatus of claim 1, 2 or 5, wherein
the first spacer (250) consists of a conductive polymer

7. The display apparatus of claim 6, wherein the conductive polymer comprises polyethylene dioxythiophene-polystyrene sulfonate.

8. A method of fabricating a display apparatus, comprising:
forming a pixel electrode (160) and a sensing electrode (170) spaced apart from each other on a first substrate (100);
forming a first insulating layer on a second substrate (200);
patterning the first insulating layer to form a first spacer (250);
forming a common electrode (240) on the second substrate (200), wherein the common electrode (240) covers the upper surface of the first spacer (250); and
coupling the first substrate (100) and the second substrate (200) together, the first spacer (250) facing and being spaced apart from an upper surface of the sensing electrode (170);
**characterized in that**
the first spacer (250) comprises a concave-convex section (260) on an upper surface thereof.

9. The method of claim 8, further comprising:
forming a second insulating layer on the common electrode (240); and
patterning the second insulating layer to form a second spacer (270),
wherein the second spacer (270) is spaced apart from the first spacer (250) and maintains an interval between the first substrate (100) and the second substrate (200).

10. The method of claim 8, wherein patterning the first insulating layer further comprises forming a second spacer (270) spaced apart from the first spacer (250), wherein the second spacer (270) maintains an interval between the first substrate (100) and the second substrate (200), and
wherein forming the common electrode (240) comprises:
forming a conductive layer on the first spacer (250) and the second spacer (270) to cover the second substrate (200); and
patterning the conductive layer such that the conductive layer on the second spacer (270) is removed.

## Patentansprüche

1. Anzeigevorrichtung, umfassend:
ein erstes Substrat (100) und ein zweites Substrat (200), die einander zugewandt sind;
eine Pixelelektrode (160), die auf dem ersten Substrat (100) angeordnet ist;
eine Messelektrode (170), die auf dem ersten Substrat (100) angeordnet ist und von der Pixelelektrode (160) beabstandet ist;
ein erstes Abstandselement (250), das auf dem zweiten Substrat (200) angeordnet ist,
wobei das erste Abstandselement (250) in Abhängigkeit von einer äußeren Kraft an die Messelektrode (170) angeschlossen ist; und
eine gemeinsame Elektrode (240), die das erste Abstandselement (250) überdeckt,
**gekennzeichnet durch** einen der Messelektrode (170) zugewandten konkavkonvexen Abschnitt (260) auf der Oberfläche des ersten Abstandselementes (250);
einen Leiter, (254), der als Reaktion auf eine äußere Kraft mit der Messelektrode (170) verbunden wird;
ein zweites Abstandselement (270), das auf dem zweiten Substrat (200) angeordnet ist und von dem ersten Abstandselement (250) beabstandet ist,
wobei das zweite Abstandselement (270) einen Abstand zwischen dem ersten Substrat (100) und dem zweiten Substrat (200) aufrechterhält;
**dadurch** gekennzeichnet, dass die ersten und zweiten Abstandselemente (250, 270) die gleiche Höhe aufweisen und beide aus Isoliermaterial gebildet sind;
wobei das erste Abstandselement (250) eine erste Nut (265) umfasst und der Leiter (254) in der ersten Nut (265) angeordnet ist.

2. Anzeigevorrichtung nach Anspruch 1, weiterhin umfassend ein zweites Abstandselement (270), angeordnet auf dem zweiten Substrat sowie im Abstand vom ersten Abstandselement (250), wobei das zweite Abstandselement (270) einen Zwischenraum zwischen dem ersten Substrat (100) und dem zweiten Substrat (200) belässt.

3. Anzeigevorrichtung nach Anspruch 2, wobei die gemeinsame Elektrode (240) zwischen dem zweiten Substrat (200) und dem zweiten Abstandselement (270) angeordnet ist.

4. Anzeigevorrichtung nach Anspruch 2, weiterhin umfassend eine gemeinsame Elektrode (240), die auf dem zweiten Substrat (200) angeordnet ist, das erste Abstandselement (250) abdeckt und das zweite Abstandselement (270) freigibt.

5. Anzeigevorrichtung nach Anspruch 1, weiterhin umfassend eine Flüssigkristallschicht (300), die zwischen dem ersten Substrat (100) und dem zweiten Substrat (200) angeordnet ist.

6. Anzeigevorrichtung nach den Ansprüchen 1, 2 oder 5, wobei das erste Abstandselement (200) aus einem leitenden Polymer besteht.

7. Anzeigevorrichtung nach Anspruch 6, wobei das leitende Polymer Polyethylendioxytiophenpolystyrensulfonat enthält.

8. Verfahren zum Herstellen einer Anzeigevorrichtung, umfassend:
Bilden einer Pixelelektrode (160) und einer Messelektrode (170), die auf voneinander beabstandete Weise auf einem ersten Substrat (100) angeordnet sind;
Bilden einer Isolierschicht (250) auf einem zweiten Substrat (200);
Bilden eines Musters in der Isolierschicht, um ein erstes Abstandselement (250) zu bilden;
Bilden einer gemeinsamen Elektrode auf dem zweiten Substrat (200), wobei die gemeinsame Elektrode (240) die obere Fläche des ersten Abstandselementes (250) abdeckt; und
zusammenschließen des ersten Substrats (100) und des zweiten Substrats (200), wobei das erste Abstandselement (250) einer oberen Fläche der Messelektrode (170) zugewandt ist und einen Abstand hierzu aufweist;
**dadurch gekennzeichnet, dass** das erste Abstandselement (250) einen konkavkonvexen Abschnitt (260) auf einer seiner oberen Flächen aufweist.

9. Verfahren nach Anspruch 8, umfassend:
Bilden einer zweiten Isolierschicht auf der gemeinsamen Elektrode (240); und
Bilden eines Musters der zweiten Isolierschicht zum Bilden eines zweiten Abstandselementes (270), wobei das zweite Abstandselement (270) einen Abstand zum ersten Abstandselement (250) aufweist und einen Zwischenraum zwischen dem ersten Substrat (100) und dem zweiten Substrat (200) herstellt.

10. Verfahren nach Anspruch 8, wobei
das Bilden eines Musters der ersten Isolierschicht weiterhin das Bilden eines zweiten Abstandselementes (270) umfasst, in einem Abstand vom ersten Abstandselement (250), wobei das zweite Abstandselement (270) einen Zwischenraum zwischen dem ersten Substrat (100) und dem zweiten Substrat (200) bildet, und wobei die gemeinsamen Elektrode (240) umfasst:
das Bilden einer leitenden Schicht auf dem ersten Abstandselement (250) und dem zweiten Abstandselement (270), um das zweite Substrat (200) abzudecken; und
Bilden eines Musters der leitenden Schicht derart, dass die leitende Schicht auf dem zweiten Abstandselement (270) entfernt wird.

## Revendications

1. Appareil d'affichage, comprenant:
un premier substrat (100) et un second substrat (200) qui se font face;
une électrode de pixel (160) disposée sur le premier substrat (100) ;
une électrode de détection (170) disposée sur le premier substrat (100) et espacée à distance de l'électrode de pixel (160) ;
un premier élément d'écartement (250) disposé sur le second substrat (200) et faisant face à l'électrode de détection (170), où le premier élément d'écartement (250) est connecté à l'électrode de détection (170) en réponse à une force externe ; et
une électrode commune (240) recouvrant le premier élément d'écartement (250) ;
**caractérisé par**:
une section concave-convexe (260) à la surface du premier élément d'écartement (250) faisant face à l'électrode de détection (170).

2. Appareil d'affichage selon la revendication 1, comprenant en outre un second élément d'écartement (270) disposé sur le second substrat (200) et espacé du premier élément d'écartement (250), où le second élément d'écartement (270) maintient un intervalle entre le premier substrat (100) et le second substrat (200).

3. Appareil d'affichage selon la revendication 2, où l'électrode commune (240) est disposée entre le second substrat (200) et le second élément d'écartement (270).

4. Appareil d'affichage selon la revendication 2, consistant en outre une électrode commune (240) disposée sur le second substrat (200), recouvrant le premier élément d'écartement (250), et exposant le second élément écartement (270).

5. Appareil d'affichage selon la revendication 1, comprenant en outre une couche de cristaux liquides (300) interposée entre le premier substrat (100) et le second substrat (200).

6. Appareil d'affichage selon les revendications 1, 2 ou 5, où le premier élément d'écartement (250) se compose d'un polymère conducteur.

7. Appareil d'affichage selon la revendication 6, où le polymère conducteur comprend du polyéthylène dioxythiophène-polystyrène sulfonate.

8. Procédé de fabrication d'un appareil d'affichage, comprenant :
la formation d'une électrode de pixel (160) et d'une électrode de détection (170), espacées l'une de l'autre sur un premier substrat (100) ;
la formation d'une première couche isolante sur un second substrat (200) ;
le placement de motifs sur la première couche isolante pour former un premier élément d'écartement (250) ;
la formation d'une électrode commune (240) sur le second substrat (200), où l'électrode commune (240) recouvre la surface supérieure du premier élément d'écartement (250) ; et
l'accouplement du premier substrat (100) et du second substrat (200) l'un à l'autre, le premier élément d'écartement (250) faisant face à et espacé d'une surface supérieure de l'électrode de détection (170) ;
**caractérisé en ce que**
le premier élément d'écartement (250) comprend une section concave-convexe (260) à la surface supérieure de celui-ci.

9. Procédé de la revendication 8, comprenant en outre :
la formation d'une seconde couche isolante sur l'électrode commune (240) ; et
le placement de motifs sur la seconde couche isolante pour former un second élément d'écartement (270), où le second élément d'écartement (270) est espacé du premier élément d'écartement (250) et maintient un intervalle entre le premier substrat (100) et le second substrat (200).

10. Procédé selon la revendication 8, où le placement de motifs sur la première couche isolante comprend en outre la formation d'un second élément d'écartement (270) espacé du premier élément d'écartement (250), où le second élément d'écartement (270) maintient un intervalle entre le premier substrat (100) et le second substrat (200), et
où la formation de l'électrode commune (240) comprend :
la formation d'une couche conductrice sur le premier élément d'écartement (250) et le second élément d'écartement (270) pour recouvrir le second substrat (200) et
le placement de motifs de la couche conductrice de telle sorte que l'on retire la couche conductrice disposée sur le second élément d'écartement (270).
